# EUROPÄISCHE PATENTSCHRIFT

(11) **EP 3 908 492 B1**
(45) Veröffentlichungstag und Bekanntmachung des Hinweises auf die Patenterteilung: **24.07.2024**
(21) Anmeldenummer: 19802125.5
(22) Anmeldetag: 07.11.2019
(51) Int. Cl.: B60W 30/16

(54) **VERFAHREN UND VORRICHTUNG ZUR AUSWAHL DES ZIELOBJEKTS FÜR EINE AUTOMATISCHE ABSTANDSREGELUNG EINES EINSPURIGEN KRAFTFAHRZEUGS**
METHOD AND DEVICE FOR SELECTING THE TARGET OBJECT FOR AUTOMATIC DISTANCE CONTROL OF A SINGLE-TRACK MOTOR VEHICLE
PROCÉDÉ ET DISPOSITIF POUR SÉLECTIONNER L'OBJET CIBLE POUR UNE RÉGULATION AUTOMATIQUE DE DISTANCE D'UN VÉHICULE À MOTEUR À DEUX ROUES PLACÉES L'UNE DERRIÈRE L'AUTRE

(30) Priorität: 10.01.2019 DE 102019200209
(43) Veröffentlichungstag der Anmeldung: 17.11.2021
(73) Patentinhaber: Robert Bosch GmbH, 70442 Stuttgart (DE)
(72) Erfinder: SCHOENHERR, Michael, 71272 Renningen-Malmsheim (DE); GRELAUD, Mathieu, 71638 Ludwigsburg (DE)
(86) Internationale Anmeldenummer: PCT/EP2019/080473
(87) Internationale Veröffentlichungsnummer: WO 2020/143942

(56) Entgegenhaltungen:
- EP-A1- 3 335 955
- WO-A1-2005/092659
- DE-A1- 10 207 580

## Beschreibung

### Stand der Technik

Die DE 10 2017 205 506 A1 offenbart ein Verfahren zur Abstandsregelung für ein einspuriges Kraftfahrzeug, welches einem unmittelbar vorausfahrenden ebenfalls einspurigen Vorderkraftfahrzeug folgt
- bei dem der Längsabstand vom einspurigen Kraftfahrzeug zum Vorderkraftfahrzeug ermittelt wird,
- bei dem der laterale Versatz zwischen dem einspurigen Kraftfahrzeug und dem Vorderkraftfahrzeug ermittelt wird,
- abhängig lateralen Versatz ein Sollabstand zwischen einspurigen Kraftfahrzeug und dem Vorderkraftfahrzeug ermittelt wird und
- durch fahrerunabhängige Variation des Bremsmoments oder des Antriebsmoments des einspurigen Kraftfahrzeugs der Längsabstand dem Sollabstand angenähert wird.

Ferner ist aus der EP 3 335 955 A1 ein entsprechendes Verfahren zur Abstandsregelung für ein einspuriges Kraftfahrzeug bekannt.

Ähnliche Verfahren sind zudem aus der WO 2005/092659 A1 und der DE 102 07 580 A1 bekannt.

### Offenbarung der Erfindung

Die Erfindung betrifft ein Verfahren zur Auswahl des Zielobjekts für eine automatische Abstandsregelung eines einspurigen Kraftfahrzeugs,
- bei welchem mittels einer Umgebungssensorik das Vorhandensein eines auf derselben Fahrspur unmittelbar vorausfahrenden zweiten einspurigen Kraftfahrzeugs und ein dem zweiten einspurigen Kraftfahrzeug unmittelbar vorausfahrenden dritten einspurigen Kraftfahrzeugs detektiert wird,
- wobei der seitliche Versatz des zweiten einspurigen Kraftfahrzeugs und des dritten einspurigen Kraftfahrzeugs gegenüber dem einspurigen Kraftfahrzeug ermittelt wird und
- abhängig von wenigstens einem der seitlichen Versätze das Zielobjekt für das Verfahren zur Abstandsregelung ausgewählt wird.

Dadurch wird für einspurige Kraftfahrzeuge eine komfortablere automatische Abstandsregelung insbesondere bei einer Gruppenfahrt ermöglicht. Durch die Erfassung zweier vorausfahrender Fahrzeuge kann in geeigneten Situationen nahezu eine Parallelfahrt zu einem stark versetzt vorausfahrenden Kraftfahrzeug ermöglicht werden und die Abstandsregelung auf ein weiteres, vor den beiden parallelen Fahrzeugen fahrendes Fahrzeug ausgerichtet werden. Bei der Abstandsregelung wird der Abstand zu einem vorausfahrenden Fahrzeug, welches als Zielobjekt bezeichnet wird, auf einen vorgegebenen Wert eingeregelt. Dieser vorgegebene Wert kann dabei auch von Größen wie z.B. der aktuellen Geschwindigkeit abhängen.

Fernerwird erfindungsgemäß für den Fall, dass der seitliche Versatz des zweiten einspurigen Kraftfahrzeugs einen vorgegebenen ersten Schwellenwert unterschreitet, das zweite einspurige Kraftfahrzeug als Zielobjekt ausgewählt. In diesem Fall wird analog zum PKW-Bereich die Abstandsregelung auf das vorausfahrende Fahrzeug bezogen.

Zudem wird erfindungsgemäß für den Fall, dass der seitliche Versatz des zweiten einspurigen Kraftfahrzeugs einen vorgegebenen zweiten Schwellenwert überschreitet und der seitliche Versatz des dritten einspurigen Kraftfahrzeugs einen vorgegebenen dritten Schwellenwert unterschreitet, das dritte einspurige Kraftfahrzeug als Zielobjekt ausgewählt.

Erfindungsgemäß sind der erste Schwellenwert und der zweite Schwellenwert und der dritte Schwellenwert gleich.

Eine vorteilhafte Ausgestaltung der Erfindung ist dadurch gekennzeichnet, dass es sich bei dem Zielobjekt um dasjenige vorausfahrende einspurige Kraftfahrzeug handelt, zu dem der Abstand des einspurigen Kraftfahrzeugs geregelt wird.

Eine vorteilhafte Ausgestaltung der Erfindung ist dadurch gekennzeichnet, dass die Abstandsregelung mittels eines fahrerunabhängigen Bremseingriffs oder Motormomenteingriffs erfolgt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

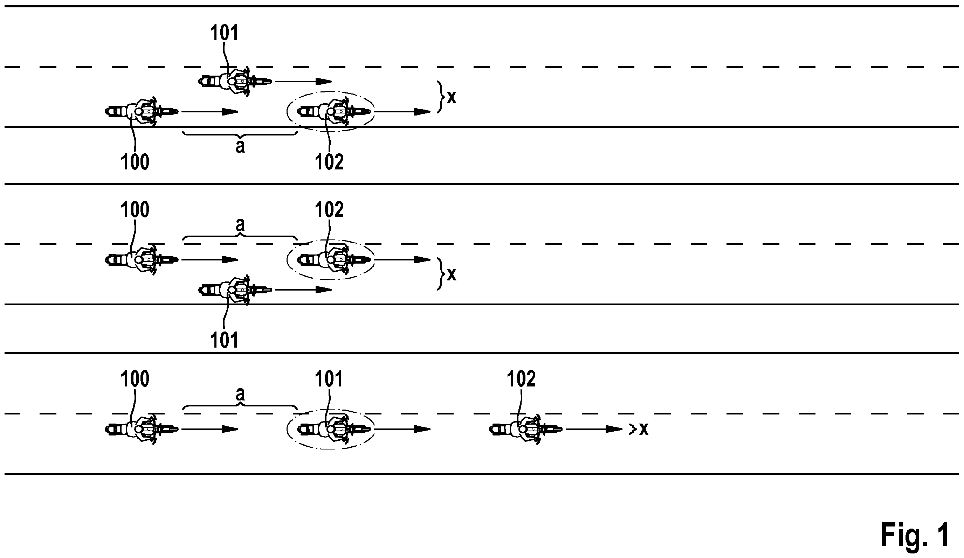

Die Zeichnung umfasst Figur 1.

In Fig.1 ist in drei Abbildungen jeweils in Draufsicht eine Gruppe von drei Motorrädern dargestellt, welche sich von links nach rechts bewegen.

Die Erfindung befasst sich mit einer Abstandsregelung für ein motorisiertes Zweirad, welches sich insbesondere in einer Gruppe anderer motorisierter Zweiräder bewegt. In den folgenden Erläuterungen wird die Erfindung für den speziellen Fall von Motorrädern beschrieben, wobei die Erfindung selbstverständlich auch auf andere motorisierte Zweiräder anwendbar ist.

Dabei wird ein Motorrad betrachtet, welches sich einer Gruppe von Motorrädern fortbewegt, wie es z.B. bei einer Gruppenfahrt häufig der Fall ist. Das Motorrad befindet sich dabei nicht an der Spitze oder der zweiten Position innerhalb der fahrenden Gruppe, sondern es nimmt die dritte Position ein oder fährt sogar noch weiter hinten.

In Gegensatz zu PKW-Fahrern fahren Motorradfahrer gerade bei einer Gruppenfahrt häufig seitlich oder lateral versetzt zueinander. Ein stark seitlich versetzt fahrendes Vorderfahrzeug braucht für ein Motorrad bei einer automatischen Abstandsregelung nicht berücksichtigt zu werden, da durch den seitlichen Versatz keine Gefahr eines Auffahrunfalls besteht. Deshalb kann eine für den Fahrer komfortablere Abstandsregelung auf der Erfassung der Position der beiden nächsten vorausfahrenden Fahrzeuge beruhen und abhängig davon wird dasjenige der beiden Fahrzeuge ausgewählt, zu welchem der Längsabstand automatisch eingeregelt werden soll.

In Fig. 1 sind von oben nach unten in Draufsicht drei Fahrsituation dargestellt, in welchem ein Motorrad 100 den beiden vorausfahrenden Motorrädern 101 und 102 folgt. Alle drei Fahrzeuge fahren auf der rechten Fahrspur der in Draufsicht dargestellten Straße von rechts nach links. Das Motorrad 100 fährt dabei mit einer automatischen Abstandsregelung, 101 ist das unmittelbar vorausfahrende Motorrad, 102 das vorderste Fahrzeug der Gruppe aus drei Motorrädern.

In der oberen Abbildung von Fig. 1 fährt das Motorrad 100 am rechten Rand der rechten Fahrspur und seine Umfeldsensorik erfasst die beiden vorausfahrenden Motorräder 101 und 102. Das Motorrad 101 weist einen großen seitlichen Versatz x gegenüber dem Motorrad 100 auf, so dass keine Auffahrgefahr besteht. Deshalb wird vom Abstandsregelungssystem das erste Motorrad 102 der Gruppe als Zielobjekt gewählt und der Abstand a eingeregelt. Das Zielobjekt ist zur Hervorhebung ebenso wie in den beiden unteren Abbildungen mit einer strichlierten Ellipse umgeben.

In der mittleren Abbildung bewegt sich das Motorrad 100 am linken Rand der rechten Fahrspur. Da wiederum ein großer seitlicher Versatz x zum vorausfahrenden Motorrad 101 vorliegt, wird als Zielobjekt wieder das erste Motorrad 102 der Gruppe gewählt und der Abstand a eingeregelt.

In der unteren Abbildung bewegen sich alle drei Motorräder 100, 101 und 102 nahezu hintereinander. Der seitliche x Versatz des Motorrads 101 gegenüber dem Motorrad 100 ist sehr gering, so dass 101 als Zielobjekt gewählt wird und dazu der Abstand a eingestellt wird.

## Patentansprüche

1. Verfahren zur Auswahl des Zielobjekts für eine automatische Abstandsregelung eines einspurigen Kraftfahrzeugs (100),
- bei welchem mittels einer Umgebungssensorik das Vorhandensein eines auf derselben Fahrspur unmittelbar vorausfahrenden zweiten einspurigen Kraftfahrzeugs (101) und ein dem zweiten einspurigen Kraftfahrzeug unmittelbar vorausfahrenden dritten einspurigen Kraftfahrzeugs (102) detektiert wird,
- wobei der seitliche Versatz (a) des zweiten einspurigen Kraftfahrzeugs und des dritten einspurigen Kraftfahrzeugs gegenüber dem einspurigen Kraftfahrzeug ermittelt wird und
- abhängig von wenigstens einem der seitlichen Versätze (x) das Zielobjekt für das Verfahren zur Abstandsregelung ausgewählt wird,
wobei für den Fall, dass der seitliche Versatz (x) des zweiten einspurigen Kraftfahrzeugs (101) einen vorgegebenen ersten Schwellenwert unterschreitet, das zweite einspurige Kraftfahrzeug (101) als Zielobjekt ausgewählt wird, und für den Fall, dass der seitliche Versatz (x) des zweiten einspurigen Kraftfahrzeugs (101) einen vorgegebenen zweiten Schwellenwert überschreitet und der seitliche Versatz (x) des dritten einspurigen Kraftfahrzeugs (102) einen vorgegebenen dritten Schwellenwert unterschreitet, das dritte einspurige Kraftfahrzeug (102) als Zielobjekt ausgewählt wird,
**dadurch gekennzeichnet, dass** der erste Schwellenwert und der zweite Schwellenwert und der dritte Schwellenwert gleich sind.

2. Verfahren nach Anspruch 1, **dadurch gekennzeichnet, dass** es sich bei dem Zielobjekt um dasjenige vorausfahrende einspurige Kraftfahrzeug (101, 102) handelt, zu dem der Abstand des einspurigen Kraftfahrzeugs geregelt wird.

3. Verfahren nach Anspruch 1, **dadurch gekennzeichnet, dass** die Abstandsregelung mittels eines fahrerunabhängigen Bremseingriffs oder Motormomenteingriffs erfolgt.

4. Vorrichtung, enthaltend Mittel, die zur Durchführung eines Verfahren nach einem der Ansprüche 1 bis 3 ausgestaltet sind.

## Claims

1. Method for selecting the target object for automatic distance control of a single-track motor vehicle (100),
- in which the presence of a second single-track motor vehicle (101) travelling directly ahead in the same lane and a third single-track motor vehicle (102) travelling directly ahead of the second single-track motor vehicle is detected by means of a surroundings sensor system,
- wherein the lateral offset (a) of the second single-track motor vehicle and the third single-track motor vehicle with respect to the single-track motor vehicle is ascertained, and
- the target object for the method for distance control is selected depending on at least one of the lateral offsets (x),
wherein, if the lateral offset (x) of the second single-track motor vehicle (101) falls below a predefined first threshold value, the second single-track motor vehicle (101) is selected as the target object, and if the lateral offset (x) of the second single-track motor vehicle (101) exceeds a predefined second threshold value and the lateral offset (x) of the third single-track motor vehicle (102) falls below a predefined third threshold value, the third single-track motor vehicle (102) is selected as the target object,
**characterized in that**
the first threshold value and the second threshold value and the third threshold value are the same.

2. Method according to Claim 1, **characterized in that** the target object is that single-track motor vehicle (101, 102) travelling ahead with respect to which the distance of the single-track motor vehicle is controlled.

3. Method according to Claim 1, **characterized in that** the distance control is carried out by means of a driver-independent braking intervention or engine torque intervention.

4. Device, containing means that are configured to carry out a method according to one of Claims 1 to 3.

## Revendications

1. Procédé permettant de sélectionner l'objet cible pour une régulation automatique de la distance d'un véhicule automobile à voie unique (100),
- dans lequel la présence d'un deuxième véhicule automobile à voie unique (101) directement précédant sur la même voie de circulation et d'un troisième véhicule automobile à voie unique (102) directement précédant le deuxième véhicule automobile à voie unique est détectée au moyen d'un système de capteurs d'environnement,
- dans lequel le décalage latéral (a) du deuxième véhicule automobile à voie unique et du troisième véhicule automobile à voie unique par rapport au véhicule automobile à voie unique est déterminé, et
- l'objet cible pour le procédé de régulation de la distance est sélectionné en fonction d'au moins l'un des décalages latéraux (x),
dans lequel, si le décalage latéral (x) du deuxième véhicule automobile à voie unique (101) est inférieur à une première valeur seuil prédéfinie, le deuxième véhicule automobile à voie unique (101) est sélectionné en tant qu'objet cible, et si le décalage latéral (x) du deuxième véhicule automobile à voie unique (101) est supérieur à une deuxième valeur seuil prédéfinie et le décalage latéral (x) du troisième véhicule automobile à voie unique (102) est inférieur à une troisième valeur seuil prédéfinie, le troisième véhicule automobile à voie unique (102) est sélectionné en tant qu'objet cible,
**caractérisé en ce que**
la première valeur seuil et la deuxième valeur seuil et la troisième valeur seuil sont identiques.

2. Procédé selon la revendication 1, **caractérisé en ce que** l'objet cible est le véhicule automobile à voie unique (101, 102) qui précède, par rapport auquel la distance du véhicule automobile est régulée.

3. Procédé selon la revendication 1, **caractérisé en ce que** la régulation de distance est effectuée au moyen d'une intervention de freinage ou d'une intervention de couple moteur indépendante du conducteur.

4. Dispositif, comportant des moyens qui sont configurés pour exécuter un procédé selon l'une quelconque des revendications 1 à 3.
